# EUROPEAN PATENT SPECIFICATION

(11) **EP 0 534 300 B1**
(45) Date of publication and mention of the grant of the patent: **29.12.1997**
(21) Application number: 92115816.8
(22) Date of filing: 16.09.1992
(51) Int. Cl.: D03J 1/08, D06H 7/22

(54) **A apparatus for the production of tapes with smooth borders by means of ultrasonic cutting**
Vorrichtung zur Herstellung von Bändern mit weichen Kanten mittels Ultraschallschneiden
Dispositif pour la fabrication de bandes à lisières douces au moyen de coupe par ultrasons

(30) Priority: 24.09.1991 IT MI912541
(43) Date of publication of application: 31.03.1993
(73) Proprietor: Saporiti, Giancarlo, 21013 Gallarate (VA) (IT)
(72) Inventor: Saporiti, Giancarlo, 21013 Gallarate (VA) (IT)
(74) Representative: Zavattoni Gusmeroli, Maria Chiara

(56) References cited:
- EP-A- 0 164 236
- DE-A- 3 815 395
- FR-A- 1 468 513
- FR-A- 2 313 186
- US-A- 4 560 427
- MELLIAND TEXTILBERICHTE no. 2, 1985, HEIDELBERG DE page 110 'Trennschweissen mit Ultraschall'

## Description

The present invention concerns the field of fabric manufacturing, particularly tapes (ribbons). At present the process is known of forming labels from a fabric by means of thermal cutting, with equipment applied to a loom. Such type of cutting however, can only be used on fabrics formed from heatsealable fibres, as for example polyester; it cannot be used with natural fibres. In addition, the labels obtained in this way have borders which are rough, sometimes wavy and irregular and at times even burnt. This is a drawback, not only with regard to appearance but also on a practical level, since the labels cbtained in this way, when applied to articles of clothing, scratch and annoy the wearer. A further drawback with this known technique is that toxic vapours are given off during processing.

From FR-2 313 186 is known an apparatus according to the preamble of claim 1 that e.g. longitudinally cuts out the selvedge of a fabric by means of ultrasonic devices.

The issue MELLIAND TEXTILBERICHTE, 21985 briefly refers to the ultrasonic cutting and sealing of articles made of mixed, natural and thermoplastic fibres, but without facing the labels cutting problem.

Another know technique foresees the use of ultrasonic cutting on pieces of fabric unwound from a beam, in a way completely separate from the weaving.

EP-A-0 164 236, for example, discloses ultrasonic cutting a fabric containing thermoplastic fibres in a direction parallel to the fabric warp, so as to form longitudinal fabric strips. The disclosed apparatus operates on the whole width of a fabric unwound from a feed-roller, thus in a way independent from the loom, and this has been formerly considered to be convenient, since a strip cutting apparatus operates much quicker than the loom.

Such process, however, involves great difficulties in the alignment of the original fabric, and so labels are often obtained with uneven edges and there is a considerable quantity of waste.

One aim of the present invention allows the drawbacks associated with the previous technique to be avoidcd, and in particular allows the provision of labels with smooth, soft and aligned borders.

A further aim is to eliminate the toxic vapours.

Yet another aim is to be able to work with fabrics made of natural fibres.

Such aim and others have been achieved with an apparatus as claimed in claim 1.

The ultrasonic cutting device is realized with adjustable blades in a transverse position to the fabric.

The invention has important advantages:
- it allows tapes to be obtained with smooth, soft borders;
- the loom can operate at high speed, it can be carried out on fabrics made partially or totally of natural fibres (cotton, linen, wool), it does not cause pollution and is not dangerous.

A further advantage which arises from the possibility of using natural fibres is that tapes can be obtained with their right side the same as the made up garment (for example a garment made from cotton with a cotton label), and this allows it to be dyed and printed even when on the garment itself, in the same colour.

The invention can be applied to any type of loom whatsoever, with any shedding system whatsoever.

Embodiments of the invention will be described below with reference to the appended figures, in which they are illustrated for sake of example only and not restrictively, and in which:
figure 1 is a diagrammatic illustration of a first type of apparatus according to the invention;
figure 2 is a diagrammatic illustration of a second type of apparatus according to the invention;
figure 3 shows a front, diagrammatic view of an ultrasonic cutting device;
figure 4 is a view taken along 4-4 in figure 3 of the upper part of the ultrasonic device.

An apparatus according to the invention is indicated as a whole with reference number 10. It comprises a loom 11 indicated with a broken line; in it there is a certain number of warp beams, shown with 12a, 12b....12n as required by the type of weaving, and guiding cylinders 14a, 14b etc. which provide the warp threads; these are opened by means of a shed opening device P, known in itself, indicated as a whole with 16 and not drawn in detail. The warp threads can be of any type whatsoever, for example of heatsealable synthetic fibre or even, preferably, with at least some of them of a natural fibre.

In the usual way, a weft thread is inserted at the shed zone and is moved to the fabric being formed by means of a reed 18. The fabric T formed in this way is passed onto a per se known template or templet, possibly heated, referenced 20, which stretches out and extends the fabric in the direction of the weft, in the usual way.

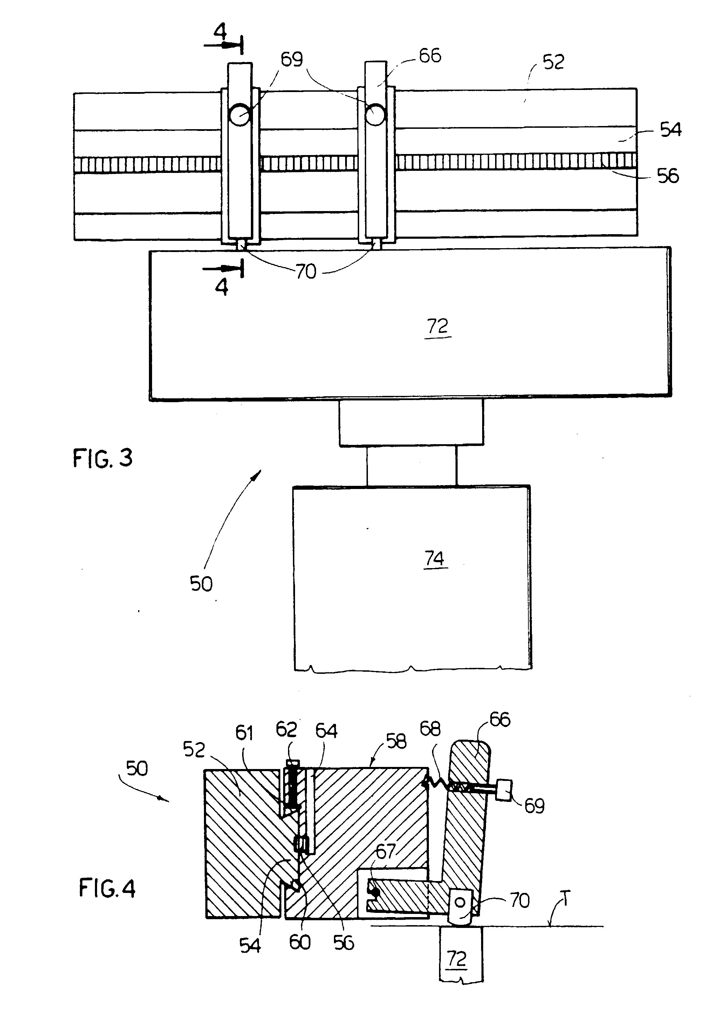

According to the embodiment of the invention, an ultrasonic cutting device is applied immediately downstream of the templet, transversely to the fabric, and is indicated as a whole with 50. The device is illustrated in detail in figures 3 and 4.

It comprises a transverse bar 52, provided with a dovetail projection 54 along it, which has a rack 56 along it. On the bar 52, exactly on the dovetail projection, several support blocks 58 are engaged, only one of which will be described in detail below, the others being the same. Each block 58 has a dovetail slot 60 for engaging the dovetail projection of the bar, and a wall 61 of the dovetail slot is realized in a flexible way, so as to be able to be driven to engage the opposite wall of the dovetail projection by means of a screw 62, thus locking the block firmly in position.

When the screw 62 is loosened, each block 58 is able to move along the bar 52, in such a way that it is possible to regulate the width of the tape which is desired to obtain. A means for moving the block for a regulated amount is a pin wrench (not shown) which is inserted into an appropriate hole 64 for engaging the teeth of the rack which project into the said hole.

The block 58 carries an L-shaped blade-holder arm 66, pivoted on the block at 67 and biassed by a pressure spring 68 to rotate in an anti-clockwise direction in figure 4. The force of the spring and thence the pressure of the blade can be adjusted by means of the screw 69. Near its elbow, the arm 66 carries a blade 70, usually made of treated steel, with a hardness of from 50 to 65 RCH (Rockwell C Hardness).

The blades 70 of the various blocks cooperate with a sonotrode 72 positioned below, usually made of titanium, which is made to vibrate at high frequency (25:50 kHz) by a converter 74 fed by a generator 76. Between the generator and the sonotrode an amplifier or "booster" is usually mounted, generally of titanium, with an amplification ratio from of 1:1 to 1:4.

Downstream from the ultrasonic cutting device, the loom 11 comprises again a cylinder or beam 80, a further cylinder or beam 82, a take-up beam or breast beam 84, followed by a deflecting or return roller or cylinder 85, a further deflecting cylinder 86 and a calender, comprising a cylinder 87 and a heated cradle 88. The calendered tapes are guided by means of a deflecting cylinder 89 and a bar 90 to the winding device 91.

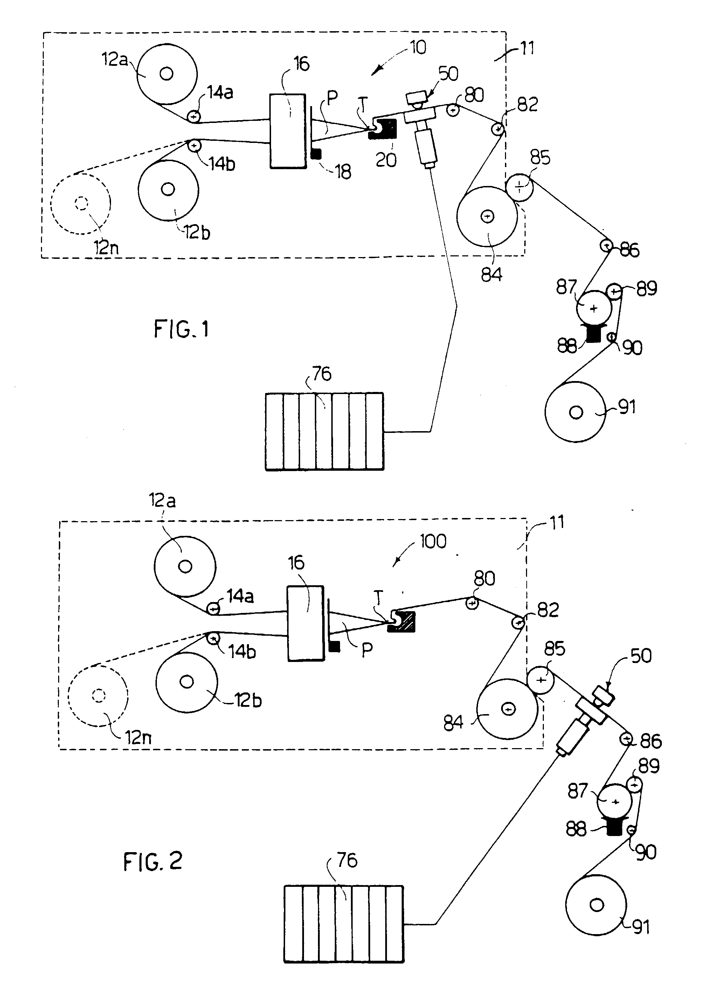

The apparatus 100 shown in figure 2 is substantially similar to the one previously described and therefore it has the same reference numbers for the same parts; except for the fact that, in this case, the ultrasonic cutting device 50 is positioned between the deflecting cylinder (85) and the further deflecting cylinder 86.

## Claims

1. A loom comprising warp beams (12a .... 12n), guiding cylinders (14a ....14n), a shed opening device (16), a reed (18), a templet (20), an ultrasonic cutting device (50) comprising a sonotrode (72), and blades for longitudinally slitting a fabric into tapes and sealing the borders, each blade being carried out on a blade-holder block (58) being carried on a transverse bar (52) on the loom characterised in that:
- a plurality of blades cooperate with said sonotrode
and in that it further comprises
- means for moving said block for a regulated amount along the bar to regulate the width of the tapes
- means for locking said block in position, said transverse bar (52) comprising a rack (56), said means for moving comprising a slot (60) of the block and a hole (64) of the block for receiving a wrench engageable with said rack, and said means for locking comprising a flexible wall (61) of said slot.

2. A loom according to claim 1 characterised in that the/each block carries an L-shaped blade-holder arm (66), pivoted on the block and biassed by a pressure spring (68).

3. A loom according to claim 2 comprising means (69) for adjusting the pressure of the spring.

## Patentansprüche

1. Rahmen komplett mit Kettbaum (12a...12n), Führwalzen (14a...14n), einer Vorrichtung zur Öffnung des Schritts (16), einem Kamm (18), einem Tempel (20), einer Ultraschallschneidevorrichtung (50) komplett mit Sonotrode (72) und Messern, die den Stoff der Länge nach in Bänder scheiden und die Kanten versiegeln. Jedes Messer ist auf einem Endmass angebracht (58), das sich auf einer quer angebrachten Stange (52) befindet, dadurch gekennzeichnet, daß:
- zahlreiche Messer arbeiten mit oben genannter Sonotrode zusammen und dadurch, ferner enthältend:
- eine Vorrichtung, um oben genanntes Endmass in geregelten Abständen längs der Stange bewegen zu können, somit die Breite der Bäder reguliert werden kann
- Vorrichtungen, um das Endmass in entsprechenden Positionen blockieren zu können, oben genannte Querstange (52) hat ferner eine Zahnstange (56), oben genannte bewegbare Vorrichtungen verfügen über einen Schlitz (60) des Endmasses und ein Loch (64) des Endmasses, das einen Schlüssel aufnehmen kann, der auf die Zahnstange wirkt und bereits genannte Schließvorrichtungen haben eine flexible Wand (61) des genannten Schlitzes.

2. Rahmen nach Anspruch 1, bei dem das/jedes Endmass einem L-förmigen Träger für die Messer hat (66), der am Endmass befestigt ist und mit einer Druckfeder festgehalten wird (68).

3. Rahmen nach Anspruch 2, komplett mit Reguliervorrichtung des Drucks der Druckfeder (69).

## Revendications

1. Métier comprenant des ensouples de chaîne (12a ... 12n), des cylindres de guidage (14a... 14n), un dispositif d'ouverture du pas (16), un peigne (18), une tempe (20), un dispositif de coupe aux ultrasons (50) comprenant une sonotrode (72), et des lames pour couper longitudinalement un tissu en rubans et sceller les bords, chaque lame étant portée par un bloc porte-lame (58) qui est porté par une barre transversale (52) sur le métier caractérisé par le fait que :
- plusieurs lames coopèrent avec ladite sonotrode,
et par le fait qu'il comprend en outre
- des éléments pour bouger ledit bloc pour une quantité réglée le long de la barre pour régler la largeur des rubans,
- des éléments pour bloquer ledit bloc en position, ladite barre transversale (52) comprenant une crémaillère (56), lesdits éléments pour bouger comprenant une fissure (60) du bloc et un trou (64) du bloc pour recevoir une clé qui s'engage dans ladite crémaillère, et lesdits éléments de fermeture comprenant une paroi flexible (61) de ladite fissure.

2. Métier selon la revendication 1, caractérisé par le fait que le/chaque bloc porte un bras porte-lame en forme de L (66), fixé par un pivot sur le bloc et pressé par un ressort à pression (68).

3. Métier selon la revendication 2, comprenant des éléments (69) de réglage de la pression du ressort.
